# EUROPEAN PATENT SPECIFICATION

(11) **EP 1 620 250 B1**
(45) Date of publication and mention of the grant of the patent: **21.10.2009**
(21) Application number: 03793764.6
(22) Date of filing: 28.08.2003
(51) Int. Cl.: B29C 65/74, B26D 7/14

(54) **DEVICE AND PROCEDURE FOR WELDING AND CUTTING PLASTIC FILMS**
VORRICHTUNG UND VERFAHREN ZUM SCHWEISSEN UND SCHNEIDEN VONKUNSTSTOFFFOLIEN
DISPOSITIF ET PROCEDE POUR SOUDER ET DECOUPER DES FILMS EN PLASTIQUE

(30) Priority: 06.09.2002 IT MI20021900
(43) Date of publication of application: 01.02.2006
(73) Proprietor: SCA HYGIENE PRODUCTS S.p.A., 55061 Carraia Lu (IT)
(72) Inventor: CALERI, Giancarlo, I-52017 Stia (IT)
(74) Representative: Furlong, Christopher Heinrich
(86) International application number: PCT/EP2003/009541
(87) International publication number: WO 2004/022316

(56) References cited:
- DE-B- 1 704 365
- GB-A- 716 783
- GB-A- 1 456 718
- JP-A- 61 069 524
- JP-A- 61 287 524
- US-A- 4 019 947
- US-A- 5 419 933
- PATENT ABSTRACTS OF JAPAN vol. 1996, no. 09, 30 September 1996 (1996-09-30) -& JP 08 119218 A (MATSUDA SEIJI), 14 May 1996 (1996-05-14)

## Description

The present invention refers to a device and procedure for welding and cutting plastic film.

In particular, hereafter reference shall be made to a device for welding two or more layers of plastic film, for example made from polyolefin, and to the subsequent cutting or realisation of perforated tearing lines.

Such devices are currently widely used to realise bags suitable for packaging baby diapers, adult diapers, ladies' pads and the like.

According to conventional embodiments such bags are made from unstretchable plastic.

In a first case devices of the conventional type foresee the welding and cutting of bags starting from a roll. In a second case bags are made starting from ready formed bags with just a single side open (in practice the upper side of the bag is already closed and can have a preformed handle, the base on the other hand is made through welding).

Conventional devices have a welding group, a holding group and, between them, a cutting group.

Therefore, by using conventional devices the roll (or the preformed bags) are held at an end by the holding group and, whilst they are welded, are cut by the cutting group.

Nevertheless, in recent times deformable and/or elastic plastic materials have been increasingly used due to the thicknesses of the films which are increasingly thinner and the mixtures used which must make the packaging materials more cost-effective, more aesthetically pleasing and/or more environmentally-friendly.

The conventional device, although it is capable of ensuring satisfactory results using unstretchable plastic films, has proved itself totally unsuitable for welding and cutting bags made using deformable and/or elastic plastic material which, in particular, can be stretched when subjected to strains in its plane as takes place in devices of the type indicated.

In this case, indeed, it has been noted that the cutting following welding causes a damaging of the welding with numerous irregularities and imperfections in the cut profile.

In more serious cases it has also been noted that the welded portions reopen.

All of this, of course, is the cause of high production waste and, therefore, costs which it would be suitable to cut.

Further, a device having the features of the preamble of claim 1 is known from US-A-4,019,947.

Document DE-B-1 704 365 discloses a method of closing stretched plastic film into bags, whereby apart from the welding seam an auxiliary tension bearing seam is produced, extending parallel to the welding seam.

The technical task proposed of the present invention is, therefore, that of realising a device and procedure for welding and cutting plastic film which allow the aforementioned technical drawbacks of the prior art to be eliminated.

In this technical task, a purpose of the invention is that of realising a device and procedure which allow films to be cut and welded so as to realise bags also using films made from deformable and/or elastic plastic which, in particular, can stretch when subjected to stress in its plane.

Another purpose of the invention is that of realising a device and procedure which do not cause the damaging of the weldings and the irregularities or imperfections in the cut profile. In particular, the device and procedure according to the present finding do not cause the reopening of the portions of the bag which are already welded.

The last but not least purpose of the invention is that of realising a device and procedure which cause a lower number of production wastes and, therefore extremely reduced production costs.

The technical task, as well as these and other purposes, according to the present invention are achieved by a device having the features of claim 1 and a procedure as defined in claim 9.

Preferred embodiments of the present invention are, moreover, defined in the dependent claims.

Further characteristics and advantages of the invention shall become clearer from the description of a preferred but not exclusive embodiment of the device and procedure for welding and cutting plastic films according to the finding, where the device is illustrated for indicating and not limiting purposes in the attached drawings, in which:

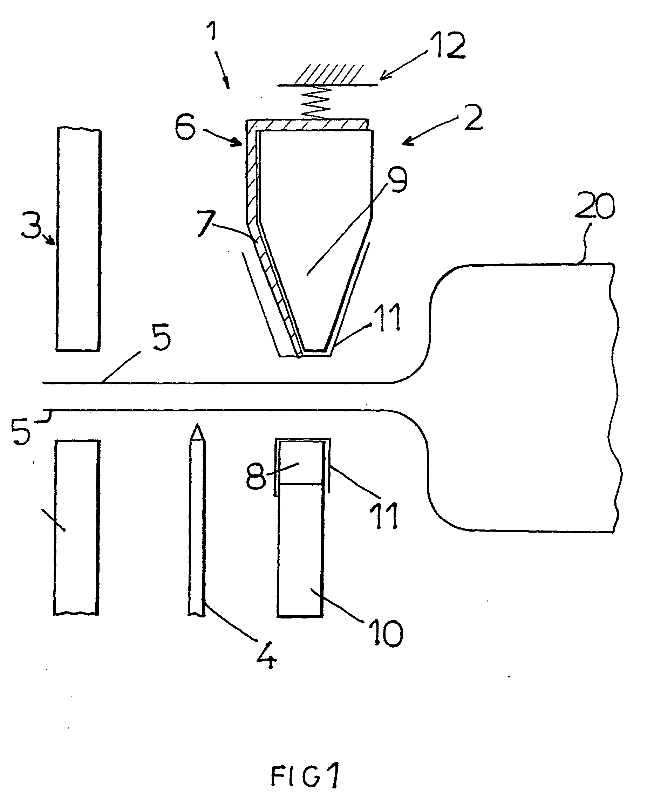

- figure 1 shows a schematic view of the device according to the present finding;

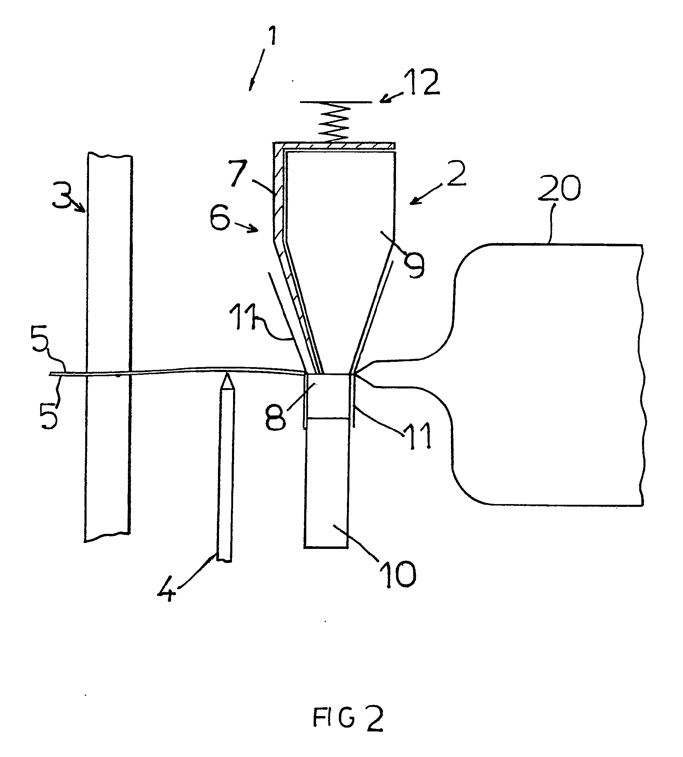

- figure 2 shows a schematic view of the device of figure 1 during the welding and cutting of the films of the bag; and

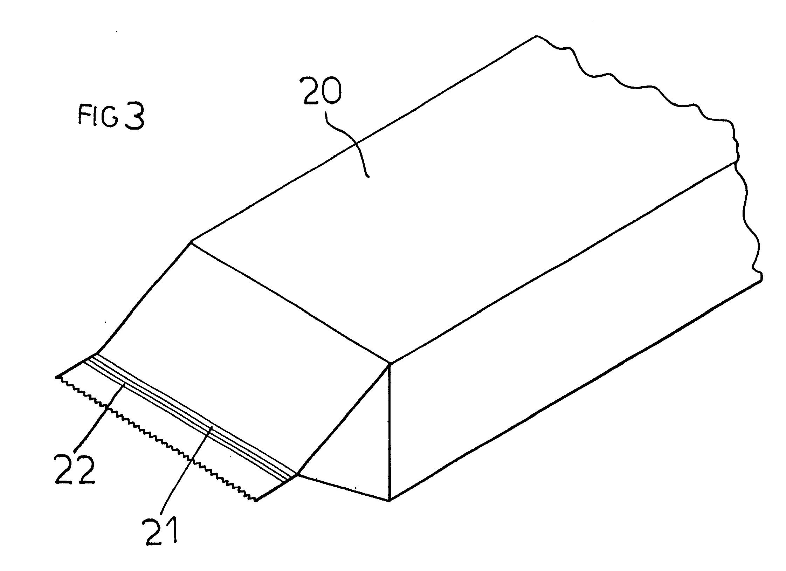

- figure 3 shows a schematic perspective view of a bag realised through the device of figure 1.
With reference to the quoted figures, a device for welding and cutting plastic films is shown, wholly indicated with reference numeral 1.

The device 1 comprises welding means 2 and first holding means 3 (equipped with a pneumatic sucking device for the waste determined by the cutting not shown for the sake of simplicity) between which means 4 for cutting the plastic films 5 which make up the bag 20 to be closed is arranged.

The cutting means 4 comprises a serrated knife with different shapes and sizes of the serrations according to the type of film used.

The device 1 also comprises second holding means 6 arranged on the opposite side to the first holding means 3 with respect to the cutting means 4, so as to hold the plastic films uniformly laid out during cutting.

The second holding means 6 is arranged adjacent and parallel to the welding means 2 between the cutting means 4 and the welding means 2 and comprise a presser7 operatively connected to an abutment element 8.

Preferably, the presser 7 is connected to a welding bar 9 of the welding means and the abutment element 8 is connected (for example superposed) to a counter welding element 10 of the welding means.

The welding bar 9 preferably is of the electrical type and has a trapezoidal cross section with a base size to fit the required welding width.

The counter welding element 10 acts as an abutment and preferably consists of a flat base made from deformable material covered by an anti-stick layer.

Preferably, during use the counter weld 10 is heated to allow the welding of the film and to not be influenced by the variability of the thickness of the films 5.

Advantageously, the presser 7 comprises a bar made from a heat conducting material such as metal and preferably copper or aluminium alloys and the abutment element 8 comprises an anti-stick rubber material resistant to heat (for example silicon rubber and PTFE fabric).

Preferably, moreover, the presser 7 and/or the abutment element 8 have a coating element 11 made from anti-stick material.

Suitably, the presser 7 has means 12 for regulating the stress applied on the plastic films which comprise one or more elastic compression springs made from harmonic steel.

According to the invention, the presser 7 in combination with the abutment element 8, is suitable for realising an additional welding cord on the plastic films.

The operation of the device for welding and cutting plastic films according to the invention appears clear from that which has been described and illustrated and, in particular, is substantially the following.

The films are held between the first holding means 3 and the second holding means 6 uniformly laid out and not deformed or stretched.

The knife 4 applies its cutting action in a regular manner and, thanks to the second holding means 6, without applying stresses on the welded portion avoiding the risk of reopening of the welding not yet cooled and of lacerations or deformations of the welded area.

Advantageously, the particular geometry of the serrations does not prejudice the quality of the cut, since the films are held in laid out position under tension.

Suitably, moreover, even temperature variations of the welding bar 9 and of the counter welding 10 generated by the process and variations in thickness of the films 5 can negatively influence the process.

The bag 20, when it is realised, besides the welding 21 (which is also realised with conventional machines), has the additional welding 22 realised by the second holding means 6 to the great advantage of the quality and secureness of the closing of the bag 20.

The regulation means 12 allow the automatic registration of the pressure on the films 5 according to the characteristics of the material of the films themselves and the stress that the material itself is undergoing by effect of the combination of the welding action and the locking applied by the first and second holding means 3, 6.

The present invention also refers to a procedure for welding and cutting plastic films 5 laid on top of each other.

The procedure according to the present finding consists of locking the films 5 between the first and second holding means defining a portion of the films 5 upon which to carry out the cutting, of welding the films in a position outside of this portion and of cutting the films 5 at the previously defined portion.

The films 5 are welded realising two adjacent and substantially parallel welding cords.

The films 5 are, suitably, made from deformable or elastic plastic.

In practice, it has been noted how the device and procedure for welding and cutting plastic film according to the invention are particularly advantageous because they allow high quality bags to be realised at substantially reduced costs.

## Claims

1. Device for welding and cutting plastic films comprising welding means (2) for producing a first welding cord (21) and a first holding means (3) between which is arranged a means for cutting (4) said plastic film;
a second holding means (6) arranged on the opposite side to said first holding means (3) with respect to said cutting means (4), so as to hold said plastic film uniformly laid out during cutting, said second holding means (6) comprises a presser (7) operatively connected to an abutment element (8)
**characterised in that** said presser (7) in combination with said abutment element (8) is adapted for realising an additional welding cord (22) on said plastic films.

2. Device according to claim 1, **characterised in that** said second holding means (6) is arranged adjacent and parallel to said welding means (2) between said cutting means (4) and said welding means (2).

3. Device according to one or more of the previous claims, **characterised in that** said presser (7) is connected to a welding bar (9) of said welding means (2) and said abutment element (8), is connected to a counter welding element (10) of said welding means (2).

4. Device according to one or more of the previous claims, **characterised in that** said presser (7) comprises a metal bar and said abutment element (8) comprises an anti-stick rubber material (11) resistant to heat.

5. Device according to one or more of the previous claims, **characterised in that** said presser (7) and/or said abutment element (8) have a coating element (11) made from anti-stick material.

6. Device according to one or more of the previous claims, **characterised in that** said presser (7) has means for regulating (12) the stress applied on the plastic films (5).

7. Device according to one or more of the previous claims, **characterised in that** said regulation means (12) comprises one or more elastic compression springs.

8. Device according to one or more of the previous claims, **characterised in that** said films (5) are made from deformable or elastic plastic.

9. Procedure for welding and cutting plastic films laid on top of each other comprising the steps of:
locking said films between first (3) and second (6) holding means defining a portion of the films (5) upon which to carry out the cutting, of welding said films (5) in a position outside of said portion and of cutting said films at the previously defined portion, **characterised in that** said films (5) are welded realising two, adjacent and substantially parallel welding cords (21, 22).

10. Procedure according to claim 9, **characterised in that** said films (5) are made from deformable or elastic plastic.

## Patentansprüche

1. Vorrichtung zum Schweißen und Schneiden von Kunststofffolien, umfassend
ein Schweißmittel (2) zum Erzeugen einer ersten Schweißlinie (21) und
ein erstes Haltemittel (3), zwischen dem ein Mittel zum Schneiden (4) der Kunststofffolie angeordnet ist,
ein zweites Haltemittel (6), das an der dem ersten Haltemittel (3) in Bezug auf das Schneidemittel (4) gegenüberliegenden Seite angeordnet ist, um die Kunststofffolie während des Schneidens gleichmäßig ausgelegt zu halten, wobei das zweite Haltemittel (6) einen Presser (7) umfasst, der mit einem Anschlagelement (8) wirkverbunden ist,
**dadurch gekennzeichnet, dass** der Presser (7) in Verbindung mit dem Anschlagelement (8) zum Realisieren einer zusätzlichen Schweißlinie (22) auf den Kunststofffolien eingerichtet ist.

2. Vorrichtung nach Anspruch 1, **dadurch gekennzeichnet, dass** das zweite Haltemittel (6) benachbart und parallel zu dem Schweißmittel (2) zwischen dem Schneidemittel (4) und dem Schweißmittel (2) angeordnet ist.

3. Vorrichtung nach einem oder mehreren der vorstehenden Ansprüche, **dadurch gekennzeichnet, dass** der Presser (7) mit einer Schweißschiene (9) des Schweißmittels (2) verbunden ist und das Anschlagelement (8) mit einem Gegenschweißelement (10) des Schweißmittels (2) verbunden ist.

4. Vorrichtung nach einem oder mehreren der vorstehenden Ansprüche, **dadurch gekennzeichnet, dass** der Presser (7) eine Metallschiene umfasst und das Anschlagelement (8) ein Antihaft-Gummimaterial (11) aufweist, das hitzebeständig ist.

5. Vorrichtung nach einem oder mehreren der vorstehenden Ansprüche, **dadurch gekennzeichnet, dass** der Presser (7) und/oder das Anschlagelement (8) ein Beschichtungselement (11) aus einem Antihaftmaterial aufweisen.

6. Vorrichtung nach einem oder mehreren der vorstehenden Ansprüche, **dadurch gekennzeichnet, dass** der Presser (7) ein Mittel zum Regulieren (12) der Spannung, die an die Kunststofffolien (5) angelegt wird, aufweist.

7. Vorrichtung nach einem oder mehreren der vorstehenden Ansprüche, **dadurch gekennzeichnet, dass** das Regulierungsmittel (12) eine oder mehrere elastische Kompressionsfedern umfasst.

8. Vorrichtung nach einem oder mehreren der vorstehenden Ansprüche, **dadurch gekennzeichnet, dass** die Folien (5) aus einem deformierbaren oder elastischen Kunststoff gemacht sind.

9. Verfahren zum Schweißen und Schneiden von Kunststofffolien, die aufeinander gelegt sind, umfassend die folgenden Schritte:
Befestigen der Folien zwischen einem ersten (3) und zweiten (6) Haltemittel, die einen Abschnitt der Folien (5) definieren, an dem das Schneiden durchzuführen ist, Schweißen der Folien (5) in einer Position außerhalb des Abschnitts und Schneiden der Folien an dem vordefinierten Abschnitt, **dadurch gekennzeichnet, dass** die Folien (5) so geschweißt werden, dass zwei benachbarte und im Wesentlichen parallele Schweißlinien (21, 22) realisiert werden.

10. Verfahren nach Anspruch 9, **dadurch gekennzeichnet, dass** die Folien (5) aus deformierbarem oder elastischem Kunststoff gemacht sind.

## Revendications

1. Dispositif pour souder et couper des films de plastique comprenant un moyen de soudage (2) pour produire un premier cordon de soudure (21) et un premier moyen de maintien (3), entre lesquels est agencé un moyen pour couper (4) lesdits films de plastique,
un second moyen de maintien (6) agencé sur le côté opposé audit premier moyen de maintien (3) par rapport audit moyen de coupe (4), de façon à maintenir ledit film de plastique disposé uniformément pendant la coupe, ledit second moyen de maintien (6) comprend un organe presseur (7) relié opérationnellement à un élément de butée (8)
**caractérisé en ce que** ledit organe presseur (7) en combinaison avec ledit élément de butée (8) est conçu pour réaliser un cordon de soudure additionnel (22) sur lesdits films de plastique.

2. Dispositif selon la revendication 1, **caractérisée en ce que** ledit second moyen de maintien (6) est agencé de façon adjacente et parallèle audit moyen de soudage (2) entre ledit moyen de coupe (4) et ledit moyen de soudage (2).

3. Dispositif selon une ou plusieurs des revendications précédentes, **caractérisé en ce que** ledit organe presseur (7) est relié à une barre de soudage (9) dudit moyen de soudage (2), et ledit élément de butée (8) est relié à un contre-élément de soudage (10) dudit moyen de soudage (2).

4. Dispositif selon une ou plusieurs des revendications précédentes, **caractérisé en ce que** ledit organe presseur (7) comprend une barre de métal et ledit élément de butée (8) comprend une matière de caoutchouc anticollant (11) résistant à la chaleur.

5. Dispositif selon une ou plusieurs des revendications précédentes, **caractérisé en ce que** ledit organe presseur (7) et/ou ledit élément de butée (8) ont un élément de revêtement (11) fait de matière anticollante.

6. Dispositif selon une ou plusieurs des revendications précédentes, **caractérisé en ce que** ledit organe presseur (7) a un moyen pour réguler (12) la contrainte appliquée sur les films de plastique (5).

7. Dispositif selon une ou plusieurs des revendications précédentes, **caractérisé en ce que** ledit moyen de régulation (12) comprend un ou plusieurs ressorts de compression élastiques.

8. Dispositif selon une ou plusieurs des revendications précédentes, **caractérisé en ce que** lesdits films (5) sont faits à partir de plastique déformable ou élastique.

9. Procédure pour souder et couper des films de plastique disposés l'un au-dessus de l'autre comprenant les étapes consistant :
à verrouiller lesdits films entre des premier (3) et second (6) moyens de maintien définissant une partie des films (5) sur laquelle effectuer la coupe, à souder lesdits films (5) dans une position à l'extérieur de ladite partie et à couper lesdits films au niveau de la partie précédemment définie, **caractérisée en ce que** lesdits films (5) sont soudés en réalisant deux cordons de soudure adjacents et sensiblement parallèles (21, 22).

10. Procédure selon la revendication 9, **caractérisée en ce que** lesdits films (5) sont faits à partir de plastique déformable ou élastique.
